# EUROPÄISCHE PATENTSCHRIFT

(11) **EP 0 977 647 B1**
(45) Veröffentlichungstag und Bekanntmachung des Hinweises auf die Patenterteilung: **08.08.2001**
(21) Anmeldenummer: 98924181.5
(22) Anmeldetag: 23.04.1998
(51) Int. Cl.: B23K 9/12

(54) **VERFAHREN UND VORRICHTUNG ZUR ERFASSUNG DER ARBEITSSPANNUNG AN SCHWEISSSTROMQUELLEN**
METHOD AND DEVICE FOR DETERMINING THE VOLTAGE AT WELDING POWER SOURCES
PROCEDE ET DISPOSITIF DE DETERMINATION DE LA TENSION AUX SOURCES DE COURANT DE SOUDAGE

(30) Priorität: 25.04.1997 DE 19717462
(43) Veröffentlichungstag der Anmeldung: 09.02.2000
(73) Patentinhaber: KUKA Schweissanlagen GmbH, 86165 Augsburg (DE)
(72) Erfinder: HERRICH, Jörg, D-86163 Augsburg (DE)
(74) Vertreter: Ernicke, Klaus Stefan
(86) Internationale Anmeldenummer: EP9802398
(87) Internationale Veröffentlichungsnummer: WO9848971

(56) Entgegenhaltungen:
- DE-U- 8 320 169
- US-A- 3 054 885
- J.LATIMER: "Automatic welding" AUTOMATIC WELDING , Juni 1952, Seiten 71-77, XP002075405

## Beschreibung

Die Erfindung betrifft ein Verfahren zur Erfassung der Arbeitsspannung an einer Schweißeinrichtung mit einer regelbaren Stromquelle und die Schweißeinrichtung mit den Merkmalen im Oberbegriff des Verfahrens- und Vorrichtungshauptanspruchs.

In der derzeit gültigen DIN VDE 0544 Teil 1 (Sicherheitsanforderungen für Einrichtungen zum Lichtbogenschweißen; Schweißstromquellen) wird die Arbeitsspannung als die "Spannung zwischen den Ausgangsklemmen einer Schweißstromquelle bei Stromfluß" und in deren überarbeitetem Entwurf vom Dezember 1995 als die "Spannung zwischen den Ausgangsklemmen einer Schweißstromquelle bei Abgabe von Schweißstrom" definiert. Die US-A-5,525,778 zeigt eine solche Schweißeinrichtung mit einer regelbaren Schweißstromquelle, bei der die für die Regelung der Arbeitsspannung und der Schweißstromquelle erforderliche Istwerterfassung an diesen Ausgangsklemmen erfolgt.

Erfolgt nun die Erfassung des Istwertes an den Ausgangsklemmen der Schweißstromquelle, hat das zur Folge, daß der Wert an dieser Stelle geregelt und somit auch nur hier die entsprechende Kennlinie mit dem definierten Gefälle bereitgestellt wird. Entsprechend o.g. DIN VDE 0544 Teil 1 kommen dabei Kennlinien mit weniger als 7V/100 A Gefälle bei steigendem Strom zum Einsatz, d.h. relativ flache Kennlinien.

Aufgrund der im Schweißstromkreis enthaltenen Teilwiderstände und damit Teilspannungsabfälle, mit Ausnahme des Abfalls über dem Lichtbogen, kommt es bei dieser Methode der Istwerterfassung am Lichtbogen zu einer Kennlinie mit größerem Gefälle, d.h. zu einem "Abknicken" der Kennlinìe. Beim Übertragen der Parameter von einer Anlage auf andere Anlagen werden sich somit aufgrund der unterschiedlichen Verlustwiderstände im Schweißstromkreis verschiedener Anlagen Kennlinien mit unterschiedlichem Gefälle ergeben. Durch die Anpassung der Schweißspannung kann der Arbeitspunkt korrigiert und somit gleiche Arbeitspunkte eingestellt werden, aber das sich unterscheidende Gefälle der Kennlinien bleibt vorhanden. Damit ergeben sich unterschiedliche Verhalten der Schweißprozesse mit sich entsprechend unterscheidenden Schweißergebnissen.

Diese Effekte treffen aber nicht nur für Anlagen mit unterschiedlichen Verlustwiderständen, sondern auch auf die an jeder Anlage über der Schweißzeit veränderlichen Verlustwiderstände zu, d.h. bei einer zeitlichen Veränderung der Verlustwiderstände kommt es zur Veränderung der Kennlinie am Lichtbogen über der Schweißzeit und damit zur Verschiebung des Arbeitspunktes mit den entsprechenden Folgen für das Prozeßverhalten sowie das Schweißergebnis. Da die Spannungsabfälle über den Nutz- und den Verlustwiderständen in den Istwert für die Regelung der Schweißstromquelle einfließen, ergeben z.B. sich erwärmende Schweißleitungen und sich vergrößernde Übergangswiderstände im Kontaktrohr einen erhöhten Gesamfspannungsabfall, den die Stromquelle entsprechend ausregelt, was nur auf Kosten der Nutzwiderstände möglich ist, d.h. es kommt zur Verkürzung der Lichtbogenlänge. Vielfach werden diese Vorgänge auch als "Abdriften der Schweißparameter" bezeichnet.

Trotz dieser bisher unbefriedigenden und mittlerweile schon in Normen festgelegten Situation haben neuere Entwicklungen, wie z.B. in EP-A-387 223 oder EP-A-520 439 beschrieben, nicht zu einer Verbesserung beigetragen sondern diesen Zustand bedauernd in Kauf genommen.

Die Literaturstelle J. Latimer, "Automatic welding" befaßt sich mit einer Regelung der Lichtbogenlänge beim Unterpulverschweißen. Hierbei wird eine Konstantstromquelle eingesetzt mit üblicherweise größeren Drahtdurchmessern, wobei geringe Änderungen der Lichtbogenmenge und somit der Lichtbogenspannung nur eine geringe Änderung der Stromstärke zur Folge haben. Die Lichtbogenlänge, die sich aufgrund unterschiedlicher Einflüsse verändern kann, wird durch eine Veränderung der Elektrodenvorschubgeschwindigkeit geregelt. Zu diesem Zweck wird die Spannung an den Quellenklemmen oder dem Kontaktrohr abgegriffen. Bei geringer werdender Lichtbogenlänge und entsprechendem Spannungsabfall wird die Elektrodenvorschubgeschwindigkeit verringert und umgekehrt bei entsprechend größer werdender Lichtbogenlänge vergrößert. Die Schweißstromquelle ist als Konstantstromquelle ausgebildet und wird nicht geregelt. Die US-A-3,054,885 zeigt ein System zur Überwachung von mehreren Schweißanlagen durch einen Bediener. Bei Störung an einer Anlage schaltet sich diese selbsttätig ab und signalisiert den Ausfall dem überwachenden Bediener, der dann die Störung beseitigen soll. Die Überwachung erfolgt über verschiedene Relais.

Der Erfindung liegt die Aufgabe zugrunde, den Istwert der Arbeitsspannung zum Zwecke der Regelung der Schweißstromquelle besser und genauer zu erfassen.

Die Erfindung löst diese Aufgabe mit den Merkmalen im Verfahrens- und Vorrichtungshauptanspruch.
Die Erfindung hat den Vorteil, daß die erfaßte Meßspannung im wesentlichen auf die für die Regelung der Schweißstromquelle erforderliche Summe der für den eigentlichen Schweißprozeß relevanten Teilspannungsabfälle über dem Lichtbogen und über dem vom Schweißstrom durchflossenen freien Ende der Drahtelektrode reduziert werden kann. Der Spannungsabfall über dem Widerstand der Drahtelektrode zwischen dem einen Abgriff und dem Punkt der Stromeinleitung ist dabei unbedeutend, weil der darüber fließende Meßstrom sehr klein ist. Damit werden zur Regelung des Schweißstroms im wesentlichen nur noch die Spannungsabfälle über den Nutzwiderständen herangezogen. Die Regelung ist entsprechend präzise. Störgrößen, welche die Regelung und damit die Übertragbarkeit, die Vergleichbarkeit, die Reproduzierbarkeit, die Prozeßstabilität und letztendlich die Qualität der Schweißungen negativ beeinflussen werden ausgeschlossen.

Durch die auf diese Weise sehr genau regelbare Spannung über den eigentlichen Nutzwiderständen, im wesentlichen dem freien Ende einer Drahtelektrode und dem Lichtbogen, ergibt sich ein konstanter Schweißprozeß trotz sich verändernder Teilwiderstände im Schweißstromkreis. So verursachen der Verschleiß des Kontaktrohres und sich erwärmende Schweißleitungen zwar erhöhte Teilwiderstände im Schweißstromkreis, diese beeinflussen aber nicht den o.g. Spannungsabfall über den Nutzwiderständen und somit auch nicht die resultierende Lichtbogenlänge.

Weiterhin liegt an diesen Nutzwiderständen die von der Quelle mit dem definierten Gefälle bereitgestellte Kennlinie an und aufgrund der geringen Größe der Teilwiderstände und damit Teilspannungsabfälle über dem freien Ende einer Drahtelektrode und dem Werkstück gegenüber dem Lichtbogen ist diese Kennlinie mit geringen Abweichungen auch am Lichtbogen verfügbar.

Mit dieser Methode ist die Reproduzierbarkeit und Übertragbarkeit, zumindest die Spannung betreffend, in einem hohen Maß gegeben. D.h. Spannungswerte aus Datenbanken, die mit dieser Erfassungsmethode des Istwertes der Spannung aufgestellt werden, sind an Schweißanlagen ohne vorherige Anpassung anwendbar und ergeben weitgehend das gleiche Schweißergebnis.

Da damit auch das "Abdriften der Schweißparameter", insbesondere den Spannungsabfall über den Nutzwiderständen und damit vor allem die Lichtbogenlänge betreffend, annähernd ausgeschlossen ist, entspricht die Qualität der Schweißungen über längere Zeiträume als bisher den geforderten Kriterien. Ebenso können voraussichtlich die Wechselintervalle der Kontaktrohre erheblich verlängert werden.

Vorteilhafte Ausgestaltungen der Erfindung werden in den Unteransprüchen vorgestellt. Diese zielen insbesondere darauf ab, bestehende Abgriffe am Werkstück oder an der Ausgangsklemme der Schweißstromquelle für die Werkstückleitung an oder in der Schweißstromquelle oder am Werkstück zu benutzen. Weiterhin werden mit den Unteransprüchen Möglichkeiten zur Nutzung bestehender Vorschubeinrichtungen und Anschlußsysteme für Brennerschlauchpakete aufgezeigt.

Bevorzugte Ausführungsbeispiele der Erfindung sind in den Zeichnungen beispielsweise und schematisch dargestellt und werden im folgenden näher beschrieben. Im einzelnen zeigen die Zeichnungen:
- Figur 1:: eine Prinzipdarstellung der Erfindung,
- Figur 2:: eine Abwandlung zu Figur 1,
- Figur 3:: eine weitere Abwandlung zu Figur 1 und 2,
- Figur 4:: eine Prinzipschaltung zu Figur 1,
- Figur 5:: eine Prinzipschaltung zu Figur 2,
- Figur 6:: eine Prinzipschaltung zu Figur 3 und
- Figur 7:: eine galvanische Trennung Drahtvorschub - Zentralanschluß

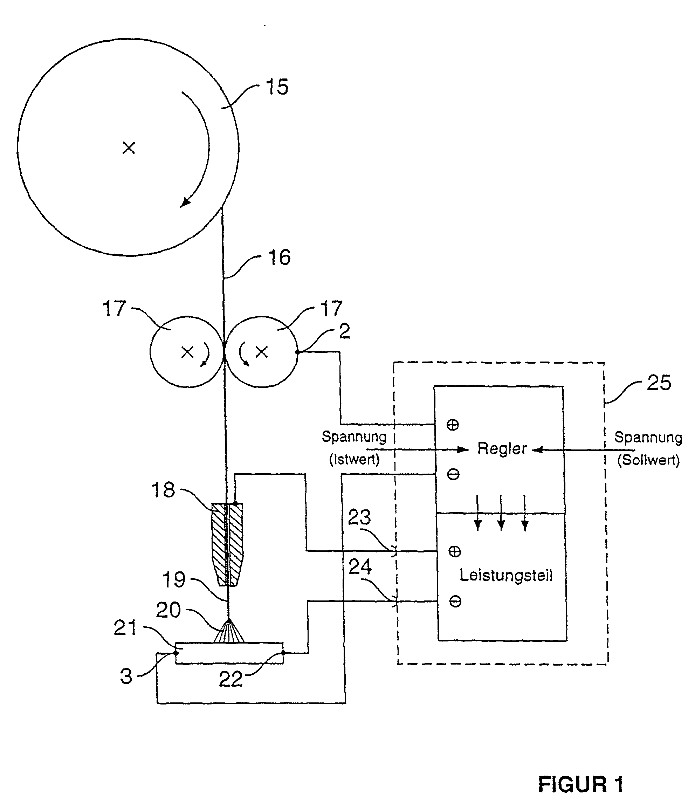

In Figur 1 wird an einer Prinzipdarstellung die Erfindung erläutert. Es ist eine geregelte Schweißstromquelle (25) vorgesehen, die z.B. in üblicher Weise prinzipiell einen Regler beinhaltet, der die Istwerte erfaßt, mit den Sollwerten vergleicht und in der Folge auf ein Leistungsteil einwirkt, um somit die Istwerte innerhalb der eingestellten Toleranzen mit den Sollwerten in Übereinstimmung zu bringen. Die Schweißstromquelle (25) stellt an den Ausgangsklemmen (23,24) eine geregelte Arbeitsspannung zur Verfügung. Der Schweißstromkreis verläuft ab der Ausgangsklemme (23) über Leitungen und Verbindungselemente zu einem Kontaktrohr (18), welches für die Einleitung des Schweißstromes in die Drahtelektrode (16) zuständig ist. Der Schweißstromkreis verläuft weiter über das freie Ende einer Drahtelektrode (19), sogenannter "stick out", und den Lichtbogen (20) zum Werkstück (21), von dort über den Werkstückanschluß (22) und wiederum Leitungen und Verbindungselemente zur anderen Ausgangsklemme (24) der Schweißstromquelle (25).

Vom freien Ende der Drahtelektrode (19) zum Werkstück (21) bildet sich während des Schweißprozesses der Lichtbogen (20) aus. Die Arbeitsspannung wird außerhalb der Ausgangsklemmen (23,24) der Schweißstromquelle (25) als Summe der für den eigentlichen Schweißprozeß relevanten Teilspannungsabfälle über dem Lichtbogen (20), über dem vom Schweißstrom durchflossenen freien Ende der Drahtelektrode (19) sowie über dem Werkstück (21) erfaßt. Die Erfassung erfolgt zwischen einem elektrisch leitenden Abgriff (2) an der Drahtelektrode (16) bzw. an der Drahtvorschubrolle (17) und einem Abgriff (3) am Werkstück (21). Der Abgriff (2) besteht z.B. an der Lageraufnahme der Lagerungen der Drahtvorschubrollen (17) der Drahtelektrode (16), wobei die elektrische Verbindung zu mindestens einer Rolle sichergestellt ist. Da der entsprechende Meßstrom aufgrund des sehr hohen Innenwiderstandes (13) der vorhandenen Spannungsmeßeinrichtung in der Schweißstromquelle (25) sehr klein ist, kann der Abgriff an der Drahtelektrode (16) bzw. an der Drahtvorschubrolle (17) ohne schädliche Auswirkungen über die Lagerungen erfolgen.

Aufgrund der im allgemeinen geringen Größe des Widerstandes (8) des Werkstückes (21) ist der in den Meßwert einfließende Spannungsabfall unbedeutend. In der Praxis kann die Länge des Brennerschlauchpaketes zwischen Brenner und Drahtvorschubsystem sehr groß sein. Entsprechend groß ist damit die Länge der Drahtelektrode (16) zwischen dem Meßpunkt, d.h. dem Abgriff (2) an der Drahtelektrode (16) oder an der Drahtvorschubrolle (17), und dem Punkt der Stromeinleitung im Kontaktrohr (18). Trotz dieser erheblich großen Elektrodenlängen ist der Spannungsabfall über dem Widerstand (14) der Drahtelektrode (16) zwischen Meßpunkt (2) und Punkt der Stromeinleitung im Kontaktrohr (18) unbedeutend, da der darüber fließende Meßstrom sehr klein ist. Dies beruht auf dem sehr großen Innenwiderstand (13) der Spannungsmeßeinrichtung in der Schweißstromquelle (25), der bei Spannungsmeßeinrichtungen prinzipiell sehr groß ist.

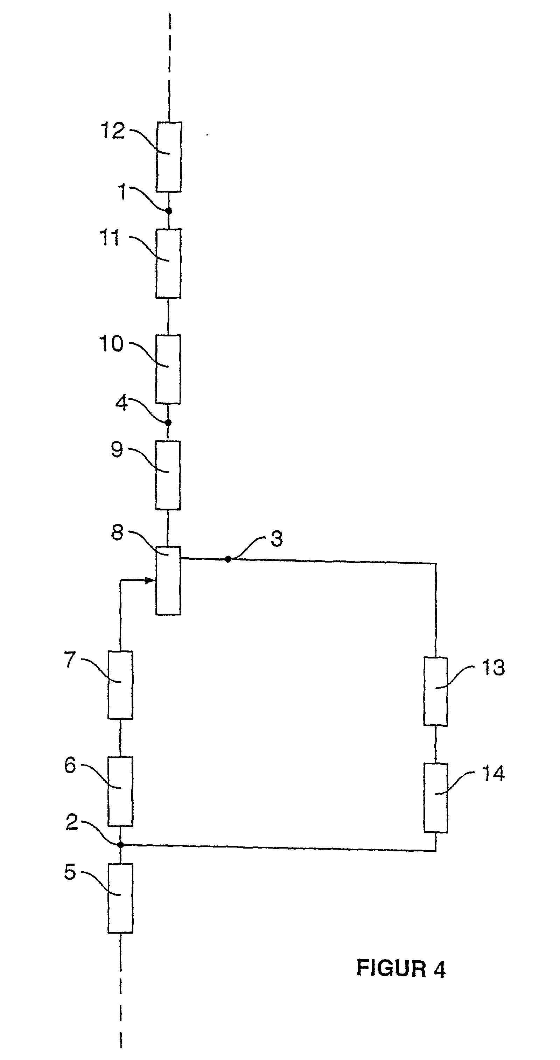

Beim Metall-Schutzgasschweißen wird nach Figur 1 die Drahtelektrode (16) aus einem Drahtvorrat (15), z.B. einer Spule, Faß oder dgl., mittels Drahtvorschubrollen (17) durch ein Kontaktrohr (18) geschoben. Hierbei bietet es sich insbesondere für stationäre Anlagen mit einer Schaltung gemäß Figur 4 an, die Arbeitsspannung zwischen einem Abgriff (2) direkt an der Drahtelektrode (16) oder an der Drahtvorschubrolle (17) der Drahtelektrode (16) und einem Abgriff (3) am Werkstück (21) zu erfassen.

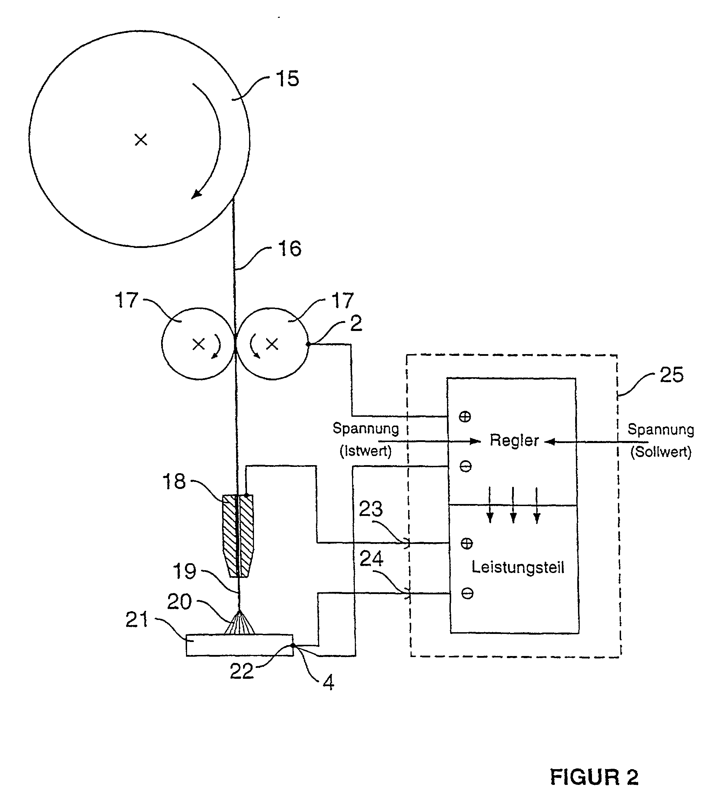

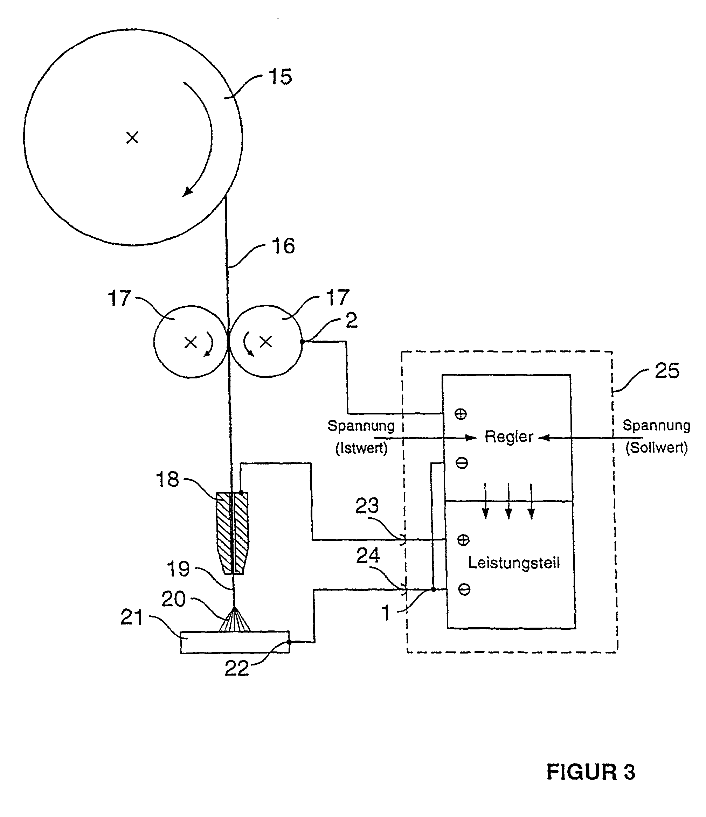

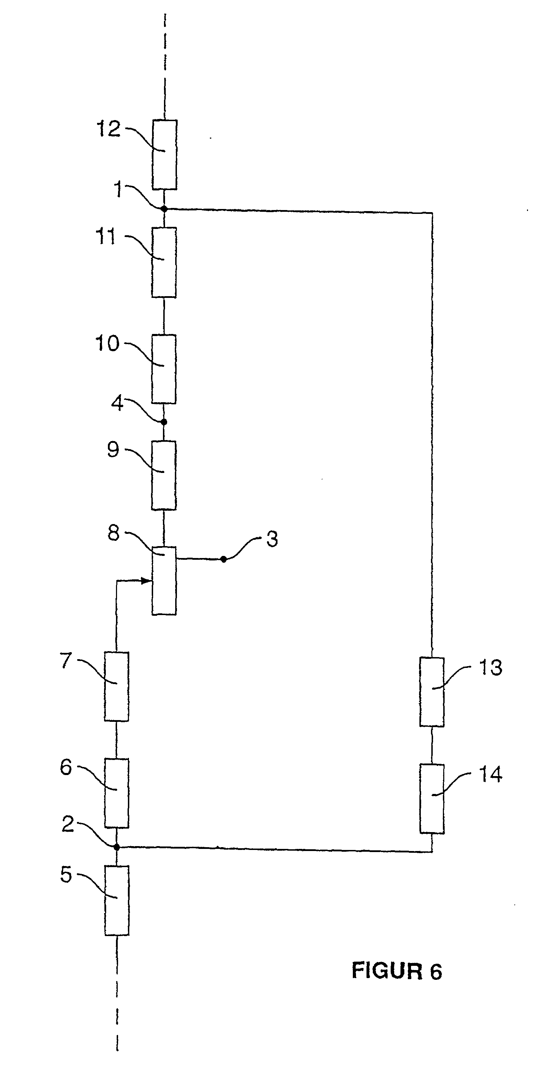

Nach Figur 2 und Figur 3 ist aber auch eine teilweise Nutzung des erfinderischen Vorschlages möglich. Dabei können zusätzliche Widerstände, z.B. der Widerstand (10) der Werkstückleitung, den Meßwert beeinflussen. Dies geschieht z.B. in Figur 3, wenn die Erfassung der Arbeitsspannung zwischen dem erwähnten Abgriff (2) und einem vorhandenen Abgriff (1) erfolgt, welcher sich an der Ausgangsklemme (24) der Schweißstromquelle (25) bzw. der Werkstückleitung oder im Inneren der Schweißstromquelle (25) befindet. Eine entsprechende Prinzipschaltung ist in Figur 6 angeführt, wobei in allen Schaltungen nach den Figuren 4 bis 6 der Innenwiderstand (12) der Schweißstromquelle (25) zur Verdeutlichung mit eingezeichnet ist. Vorteilhaft ist dabei, daß vorhandene Abgriffe benutzt werden können und keine zusätzlichen Meßleitungen geführt werden müssen, wobei mehr Störgrößen in Kauf genommen werden.

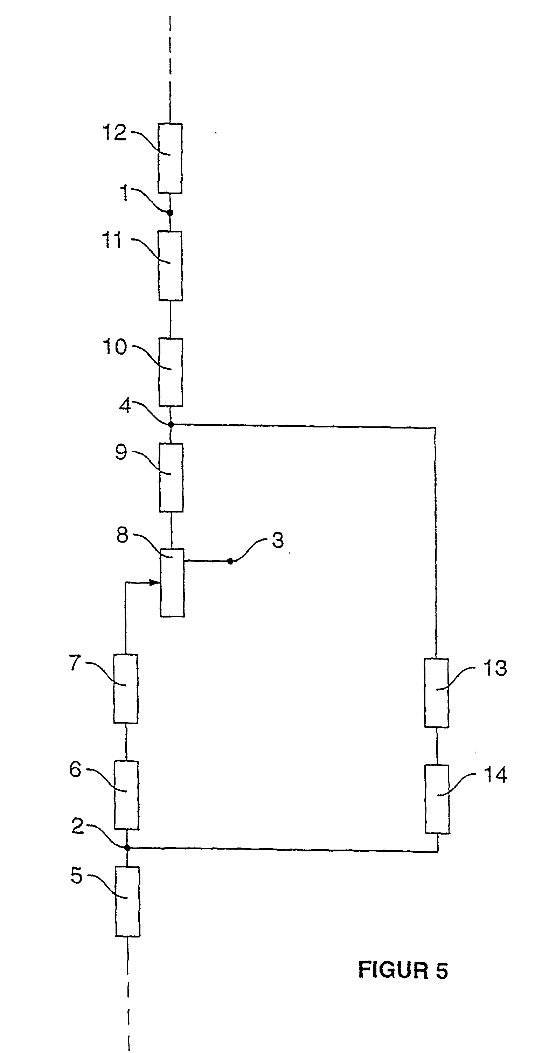

In einer Variante des Gedanken der Einbeziehung vorhandener Anschlußelemente und Abgriffe wird gemäß Figur 2 und 5 der Abgriff (4) am Werkstückanschluß (22) genutzt, wobei zusätzliche Meßleitungen angebracht werden. Dabei werden erhebliche Verlustwiderstände, wie z.B. der Widerstand (10) der Werkstückleitung ausgeschlossen

Bei allen Varianten ist die Integration der Meßleitung für den Abgriff (2) in das Schlauchpaket zwischen Schweißstromquelle (25) und Drahtvorschubgerät möglich. Hierfür ist keine zusätzliche Verlegung von Leitungen erforderlich.

Figur 4 zeigt eine Prinzipschaltung zur Erfassung der Arbeitsspannung über vom Schweißstrom durchflossenen Widerständen an Schweißstromquellen (25), wobei die Erfassung außerhalb der Ausgangsklemmen (23,24) der Schweißstromquelle (25) erfolgt. Zwischen einem Übergangswiderstand (5) bei der Einleitung des Schweißstromes in die Drahtelektrode (16) und einem Kontaktwiderstand (9) eines Werkstückanschlusses (22), wird eine Meßspannung über einem Widerstand (6) des vom Schweißstrom durchflossenen freien Endes (19) der Drahtelektrode (16), einem Widerstand (7) des Lichtbogens (20) und einem Widerstand (8) des Werkstückes (21) abgegriffen. Der resultierende Meßstrom ist aufgrund des prinzipiell sehr hohen Innenwiderstandes (13) der Spannungsmeßeinrichtung in der Schweißstromquelle (25) sehr klein und ruft keinen für die Genauigkeit der Regelung bedeutenden Spannungsabfall hervor.

Zu den vorgenannten Abwandlungen von Figur 2 und 3 mit der Ausnutzung vorhandener Anschlußelemente und teilweisem Wegfall von Meßleitungen werden in Figur 5 und Figur 6 Prinzipschaltungen bzw. Ersatzschaltbilder angegeben.

Dabei wird wie in Figur 4 die Meßspannung über dem Widerstand (6) des vom Schweißstrom durchflossenen freien Endes (19) der Drahtelektrode (16), dem Widerstand (7) des Lichtbogens (20) und dem Widerstand (8) des Werkstückes (21) abgegriffen. Weiterhin ist es nach Figur 5 möglich, die Meßspannung zusätzlich über einem Kontaktwiderstand (9) des Werkstückanschlusses (22) abzugreifen. Dieser Abgriff ist ebenso an einer Schweißvorrichtung denkbar, die neben der Fixierung der Teile auch die Aufgabe hat, den Schweißstrom in das Schweißteil einzuleiten.

Auch ist es nach Figur 6 möglich, die Meßspannung über den erwähnten Widerständen (6,7,8,9) und einem Widerstand (10) der Werkstückleitung sowie einem Kontaktwiderstand (11) der Anschlußelemente der Werkstückleitung an der Schweißstromquelle (25) abzugreifen, wobei letzterer Abgriff (1) an der Ausgangsklemme (24) der Schweißstromquelle (25) bzw. in deren Innerem erfolgt.

Selbst die Variante von Figur 6 bietet noch entscheidende Vorteile gegenüber der herkömmlichen Methode. So werden nach wie vor erhebliche Längen an Schweißleitungen aus der Messung ausgeschlossen. Ausgeschlossen sind aber vor allem auch solche Störgrößen, wie die veränderliche Stromeinleitung im Kontaktrohr aufgrund seines Verschleißes und der damit veränderliche Verlustwiderstand.

Zur Umsetzung der Erfindung wird eine Vorrichtung vorgeschlagen, die ein Kontaktrohr (18) zur Übertragung des Schweißstromes auf die Drahtelektrode (16) aufweist, wobei die Drahtelektrode (16) keine weiteren elektrischen Verbindungen zum Potential des Schweißstromkreises hat. Das Drahtvorschubsystem ist elektrisch gegenüber dem Schweißstromkreis isoliert. Die Erfassung der Meßspannung erfolgt über einem Abgriff (2) direkt an der Drahtelektrode (16) oder an der Drahtvorschubrolle (17) des isolierten Drahtvorschubsystems und einem Abgriff (3) am Werkstück.

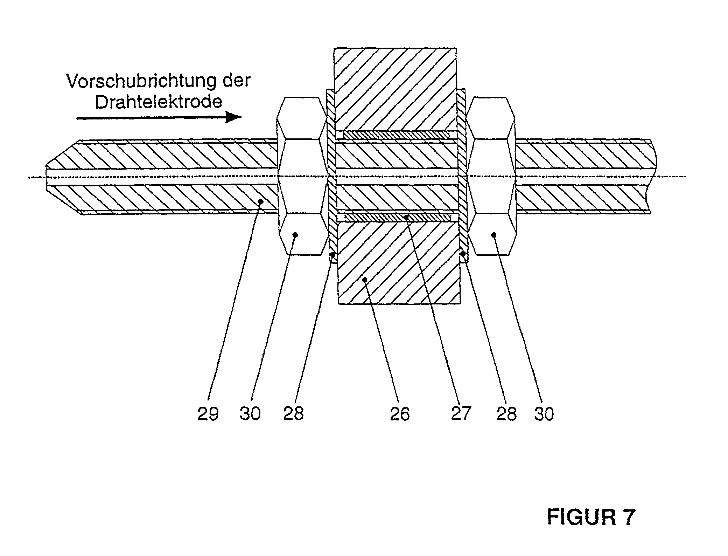

Figur 7 zeigt eine vorteilhafte Ausgestaltungen dieser Vorrichtung mit einem Zentralanschluß für ein Brennerschlauchpaket und mit einer direkten elektrischen Verbindung einer Vorschubeinrichtung mit dem Potential des Schweißstromkreises, abgesehen von der Verbindung über die Drahtelektrode. Bei dem Zentralanschluß ist eine Aufnahmeplatte (26) für Drahtvorschubrollen (17), deren Lagerungen oder dgl. vorgesehen. Diese besitzt eine vergrößerte Bohrung und ist mit einer eingesetzten elektrisch isolierenden Buchse (27) und beidseitigen elektrisch isolierenden Scheiben (28) ausgerüstet. Zur Befestigung dienen übliche Sechskantmuttern (30). Dies bietet eine galvanische Trennung eines Drahteinlaufstückes (29) in das Brennerschlauchpaket gegenüber der Vorschubeinrichtung.

In einer weiteren vorteilhaften Ausgestaltung der Vorrichtung mit Zentralanschluß für ein Brennerschlauchpaket, welcher gleichzeitig Bestandteil des Schweißstromkreises ist, wird ein Kunststoffschlauch zur Führung der Drahtelektrode (16) eingesetzt. Der Kunststoffschlauch isoliert die Drahtelektrode (16) elektrisch, mit Ausnahme von der Kontaktierung im Kontaktrohr (18) gegenüber dem Schweißstromkreis und mit Ausnahme von der Kontaktierung bei der Erfassung der Spannung über den Abgriff (2) an der Drahtelektrode (16) oder an der Drahtvorschubrolle (17). Hierbei wird ebenfalls ein Kontaktrohr (18) zur Übertragung des Schweißstromes auf die Drahtelektrode (16) eingesetzt, wobei die Drahtelektrode (16) keine weiteren elektrischen Verbindungen zum Potential des Schweißstromkreises aufweist. Die Erfassung der Meßspannung erfolgt über den Abgriff (2) an der Drahtelektrode (16) bzw. Drahtvorschubrolle (17) des elektrisch gegenüber dem Schweißstromkreis isolierten Drahtvorschubsystems und einen Abgriff (1,3,4) nach Figur 1, 2 oder 3 bzw. 4, 5 oder 6.

Eine weitere Ausgestaltung besteht darin, daß eine bekannte separate Anschlußklemme am Drahtvorschubgerät und an der Schweißleitung im Brennerschlauchpaket zum Einsatz kommen und der Schweißstrom von dieser Leitung auf das Kontaktrohr (18) und im weiteren auf die Drahtelektrode (16) übertragen wird, wobei im Gegensatz zum Zentralanschluß, diese Leitung keine weiteren unmittelbaren oder mittelbaren elektrischen Verbindungen zur Drahtelektrode (16) aufweist.

Die oben genannte Bedingungen der elektrischen Isolierung des Drahtvorschubgerätes gegenüber dem Schweißstromkreis werden entsprechend auch bei zusätzlichen Drahtvorschubgeräten eingehalten, wie sie bei langen Schlauchpaketen bzw. in Brennern zum Einsatz kommen. Außerdem kann die erfindungsgemäße Erfassung der Spannung über den Abgriff (2) an der Drahtelektrode (16) oder an der Drahtvorschubrolle (17) auch an einem dieser zusätzlichen Drahtvorschubgeräte erfolgen.

Die bei der Realisierung der Erfindung angewendeten Meßleitungen zur Erfassung des Istwertes der Schweißspannung sollten in geschirmter Ausführung verwendet werden. Die Abschirmung sollte ebenfalls mit dem Gehäuse der Schweißstromquelle verbunden werden, um Störungen zu vermeiden.

### BEZUGSZEICHENLISTE

- 1: Abgriff an der Ausgangsklemme der Schweißstromquelle
- 2: Abgriff an Drahtelektrode bzw. Drahtvorschubrolle
- 3: Abgriff am Werkstück
- 4: Abgriff am Werkstückanschluß
- 5: Übergangswiderstand bei der Einleitung des Schweißstromes in die Drahtelektrode
- 6: Widerstand des vom Schweißstrom durchflossenen freien Endes einer Drahtelektrode
- 7: Widerstand des Lichtbogens
- 8: Widerstand des Werkstückes
- 9: Kontaktwiderstand des Werkstückanschlusses
- 10: Widerstand der Werkstückleitung
- 11: Kontaktwiderstand der Anschlußelemente der Werkstückleitung an der Schweißstromquelle
- 12: Innenwiderstand der Schweißstromquelle
- 13: Innenwiderstand der vorhandenen Spannungsmeßeinrichtung in der Schweißstromquelle
- 14: Widerstand der Drahtelelektrode zwischen Meßpunkt und Punkt der Stromeinleitung im Kontaktrohr
- 15: Drahtvorrat, wie Spule, Faß o.ä.
- 16: Drahtelektrode
- 17: Drahtvorschubrolle
- 18: Kontaktrohr
- 19: freies Ende einer Drahtelektrode, "stick out"
- 20: Lichtbogen
- 21: Werkstück
- 22: Werkstückanschluß
- 23: Ausgangsklemmen der Schweißstromquelle
- 24: Ausgangsklemmen der Schweißstromquelle
- 25: Schweißstro'mquelle
- 26: Aufnahmeplatte für Drahtvorschubrollen, Lagerungen
- 27: elektrisch isolierende Buchse
- 28: elektrisch isolierende Scheibe
- 29: Drahteinlaufstück
- 30: Sechskantmutter

## Patentansprüche

1. Verfahren zur Erfassung der Arbeitsspannung an einer Schweißeinrichtung mit einer regelbaren Schweißstromquelle (25), einer Drahtelektrode (16), einer Drahtvorschubeinrichtung (17) und einer Vorrichtung zur Erfassung der Arbeitsspannung an der Schweißstromquelle (25), wobei die gemessene Arbeitsspannung zur Regelung der Schweißstromquelle (25) herangezogen wird, dadurch **gekennzeichnet,** daß die Arbeitsspannung zumindest teilweise außerhalb der Ausgangsklemmen (23,24) der Schweißstromquelle (25) erfaßt wird, wobei ein Abgriff (2) mit Abstand vor dem Punkt der Stromeinleitung und direkt an der Drahtelektrode (16) oder an der Drahtvorschubrolle (17) der Drahtelektrode (16) erfolgt.

2. Verfahren nach Anspruch 1, dadurch **gekennzeichnet,** daß die Arbeitsspannung im wesentlichen als Summe der für den eigentlichen Schweißprozeß relevanten Teilspannungsabfälle über einem Lichtbogen (20), über einem vom Schweißstrom durchflossenen freien Ende (19) und dem Stück bis zum Abgriff (2) der Drahtelektrode (16) sowie über einem Widerstand (8) des Werkstückes (21) gemessen wird.

3. Verfahren nach Anspruch 1 oder 2, dadurch **gekennzeichnet**, daß der durch den Widerstand des Werkstückes (8) in den Meßwert einfließende Spannungsabfall vernachlässigt wird.

4. Verfahren nach Anspruch 1, 2 oder 3, dadurch **gekennzeichnet,** daß der zweite Abgriff (3) am Werkstück (21) erfolgt.

5. Verfahren nach Anspruch 1, 2 oder 3, dadurch **gekennzeichnet,** daßder zweite Abgriff (1) an der Ausgangsklemme (24) der Schweißstromquelle (25) oder in der Schweißstromquelle (25) erfolgt.

6. Verfahren nach Anspruch 1, 2 oder 3, dadurch **gekennzeichnet,** daß der zweite Abgriff (4) an einem Werkstückanschluß (22) erfolgt.

7. Verfahren nach einem der Ansprüche 1 bis 6, dadurch **gekennzeichnet,** daß die Erfassung der Arbeitsspannung bei einem Metall-Schutzgasschweißverfahren erfolgt.

8. Schweißeinrichtung mit einer Schweißstromquelle (25), einer Drahtelektrode (16), einer Drahtvorschubeinrichtung (17) und einer Vorrichtung zur Erfassung der Arbeitsspannung an der Schweißstromquelle (25), wobei die Schweißstromquelle (25) einen Regler und ein Leistungsteil aufweist, dadurch **gekennzeichnet,** daß die Abgriffe (1,2,3,4). zumindest teilweise außerhalb der Ausgangsklemmen (23,24) der Schweißstromquelle (25) liegen und mit dem Regler der Schweißstromquelle (25) verbunden sind, wobei der eine Abgriff (2) mit Abstand vor dem Punkt der Stromeinleitung und direkt an der Drahtelektrode (16) oder an der Drahtvorschubrolle (17) einer Drahtelektrode (16) angeordnet ist.

9. Schweißeinrichtung nach Anspruch 8, dadurch **gekennzeichnet,** daß der andere Abgriff (3,4) am Werkstück (21) oder an einem Werkstückanschluß (22) angeordnet ist.

10. Schweißeinrichtung nach Anspruch 8 oder 9, dadurch **gekennzeichnet,** daß der andere Abgriff (1) an einer Ausgangsklemme (24) der Schweißstromquelle (25) oder in der Schweißstromquelle (25) angeordnet ist.

11. Schweißeinrichtung nach einem der Ansprüche 8 bis 10, dadurch **gekennzeichnet,** daß ein Kontaktrohr (18) zur Übertragung des Schweißstromes auf die Drahtelektrode (16) vorgesehen ist.

12. Schweißeinrichtung nach Anspruch 11, dadurch **gekennzeichnet,** daß die Drahtelektrode (16) keine weiteren elektrischen Verbindungen zum Potential des Schweißstromkreises aufweist.

13. Schweißeinrichtung nach einem der Ansprüche 8 bis 12, dadurch **gekennzeichnet,** daß das Drahtvorschubsystems mit Ausnahme des Abgriffs (2) an der Drahtvorschubrolle (17) elektrisch gegenüber dem Schweißstromkreis isoliert ist.

14. Schweißeinrichtung nach einem der Ansprüche 8 bis 13, dadurch **gekennzeichnet**, daß ein Zentralanschluß für ein Brennerschlauchpaket vorgesehen ist, wobei die Drahtvorschubeinrichtung ausgenommen über die Drahtelektrode (16) eine direkte elektrische Verbindung mit dem Potential des Schweißstromkreises aufweist.

15. Schweißeinrichtung nach Anspruch 14, dadurch **gekennzeichnet**, daß der Zentralanschluß eine galvanischen Trennung einer Aufnahmeplatte (26) für Drahtvorschubrollen (17) oder deren Lagerung gegenüber einem Drahteinlaufstück (29) in das Brennerschlauchpaket aufweist.

16. Schweißeinrichtung nach Anspruch 13, 14 oder 15, dadurch **gekennzeichnet,** daß der Zentralanschluß einen Kunststoffschlauch zur Führung der Drahtelektrode (16) aufweist, der diese mit Ausnahme von der Kontaktierung im Kontaktrohr (18) gegenüber dem Schweißstromkreis und mit Ausnahme von der Kontaktierung bei Abgriff (2) an der Drahtelektrode (16) bzw. an der Drahtvorschubrolle (17) elektrisch isoliert.

17. Schweißeinrichtung nach einem der Ansprüche 8 bis 13, dadurch **gekennzeichnet,** daß eine separate Ausgangsklemme am Drahtvorschubgerät und Schweißleitung im Brennerschlauchpaket vorgesehen sind, wobei der Schweißstrom von dieser Leitung auf das Kontaktrohr (18) und im weiteren auf die Drahtelektrode (16) übertragen wird und diese Leitung keine weiteren unmittelbaren oder mittelbaren elektrischen Verbindungen zur Drahtelektrode (16) aufweist.

## Claims

1. Method of sensing the operating voltage at a welding device with a controllable welding current source (25), a wire electrode (16), a wire advancing device (17) and a device for sensing the operating voltage at the welding current source (25), the measured operating voltage being used for controlling the welding current source (25), characterized in that the operating voltage is at least partly sensed outside the output terminals (23, 24) of the welding current source (25), one pick-up (2) taking place at a distance ahead of the point of current introduction and directly at the wire electrode (16) or at the wire advancing roller (17) of the wire electrode (16).

2. Method according to Claim 1, characterized in that the operating voltage is measured essentially as the sum of the partial voltage drops, relevant for the actual welding process, across an arc (20), across a free end (19), through which the welding current flows, and the piece up to the pick-up (2) of the wire electrode (16) and also across a resistance (8) of the workpiece (21).

3. Method according to Claim 1 or 2, characterized in that the voltage drop influencing the measured value through the resistance of the workpiece (8) is ignored.

4. Method according to Claim 1, 2 or 3, characterized in that the second pick-up (3) takes place at the workpiece (21).

5. Method according to Claim 1, 2 or 3, characterized in that the second pick-up (1) takes place at the output terminal (24) of the welding current source (25) or in the welding current source (25).

6. Method according to Claim 1, 2 or 3, characterized in that the second pick-up (4) takes place at a workpiece connection (22).

7. Method according to one of Claims 1 to 6, characterized in that the sensing of the operating voltage takes place in a metal inert-gas-shielded welding process.

8. Welding device with a welding current source (25), a wire electrode (16), a wire advancing device (17) and a device for sensing the operating voltage at the welding current source (25), the welding current source (25) having a controller and a power section, characterized in that the pick-ups (1, 2, 3, 4) lie at least partly outside the output terminals (23, 24) of the welding current source (25) and are connected to the controller of the welding current source (25), one pick-up (2) being arranged at a distance ahead of the point of current introduction and directly at the wire electrode (16) or at the wire advancing roller (17) of a wire electrode (16).

9. Welding device according to Claim 8, characterized in that the other pick-up (3, 4) is arranged at the workpiece (21) or at a workpiece connection (22).

10. Welding device according to Claim 8 or 9, characterized in that the other pick-up (1) is arranged at an output terminal (24) of the welding current source (25) or in the welding current source (25).

11. Welding device according to one of Claims 8 to 10, characterized in that a contact tube (18) for transferring the welding current to the wire electrode (16) is provided.

12. Welding device according to Claim 11, characterized in that the wire electrode (16) has no further electrical connections to the potential of the welding current circuit.

13. Welding device according to one of Claims 8 to 12, characterized in that the wire advancing system is electrically insulated with respect to the welding current circuit with the exception of the pick-up (2) at the wire advancing roller (17).

14. Welding device according to one of Claims 8 to 13, characterized in that a central connection for a torch hose assembly is provided, the wire advancing device having a direct electrical connection to the potential of the welding current circuit except via the wire electrode (16).

15. Welding device according to Claim 14, characterized in that the central connection has an electrical isolation of a receiving plate (26) for wire advancing rollers (17) or their mounting with respect to a wire run-in piece (29) into the torch hose assembly.

16. Welding device according to Claim 13, 14 or 15, characterized in that the central connection has a plastic hose for guiding the wire electrode (16), which hose electrically insulates the latter, with the exception of the contacting in the contact tube (18), with respect to the welding current circuit, and with the exception of the contacting for pick-up (2) at the wire electrode (16) or at the wire advancing roller (17).

17. Welding device according to one of Claims 8 to 13, characterized in that a separate output terminal at the wire advancing device and a welding line in the torch hose assembly are provided, the welding current being transferred by this line to the contact tube (18) and on to the wire electrode (16), and this line has no further direct or indirect electrical connections to the wire electrode (16).

## Revendications

1. Procédé pour détecter la tension de travail sur un dispositif de soudage comportant une source (25) de courant de soudage réglable, un fil-électrode (16), un dispositif (17) d'avance du fil et un dispositif pour détecter la tension de travail sur la source (25) de courant de soudage, la tension de travail mesurée étant utilisée pour réguler la source (25) de courant de soudage, caractérisé en ce que la tension de travail est détectée au moins en partie à l'extérieur des bornes (23, 24) de sortie de la source (25) de courant de soudage, un prélèvement (2) s'effectuant à distance avant le point de l'introduction du courant et directement sur le fil-électrode (16) ou sur le galet (17) d'avance du fil-électrode (16).

2. Procédé suivant la revendication 1, caractérisé en ce que la tension de travail est mesurée essentiellement comme somme des chutes de tension partielle pertinentes pour l'opération de soudage proprement dite sur un arc (20) électrique, sur une extrémité (19) libre dans laquelle passe le courant de soudage et sur le tronçon jusqu'au point (2) de prélèvement du fil-électrode (16) ainsi que sur une résistance (8) de la pièce (21).

3. Procédé suivant la revendication 1 ou 2, caractérisé en ce que la chute de tension entrant par la résistance de la pièce (8) dans la valeur de mesure est négligée.

4. Procédé suivant la revendication 1, 2 ou 3, caractérisé en ce que le deuxième prélèvement (3) s'effectue sur la pièce (21).

5. Procédé suivant la revendication 1, 2 ou 3, caractérisé en ce que le deuxième prélèvement (1) s'effectue à la borne (24) de sortie de la source (25) de courant de soudage ou dans la source (25) de courant de soudage.

6. Procédé suivant la revendication 1, 2 ou 3, caractérisé en ce que le deuxième prélèvement (4) s'effectue à un raccordement (22) de la pièce.

7. Procédé suivant l'une des revendications 1 à 6, caractérisé en ce que la détection de la tension de travail s'effectue dans un procédé de soudage à l'arc avec fil-électrode en atmosphère gazeuse.

8. Dispositif de soudage comportant une source (25) de courant de soudage, un fil-électrode (16), un dispositif (17) d'avance du fil et un dispositif pour détecter la tension de travail sur la source (25) de courant de soudage, la source (25) de courant de soudage comportant un régulateur et une partie de fourniture d'énergie, caractérisé en ce que les points (1, 2, 3, 4) de prélèvement se trouvent au moins en partie à l'extérieur des bornes (23, 24) de sortie de la source (25) de courant de soudage et sont reliés au régulateur de la source (25) de courant de soudage, l'un (2) des points de prélèvement étant disposé à distance avant le point de l'introduction du courant et directement sur le fil-électrode (16) ou sur le galet (17) d'avance du fil d'un fil-électrode (16).

9. Dispositif de soudage suivant la revendication 8, caractérisé en ce que l'autre point (3, 4) de prélèvement est disposé sur la pièce (21) ou sur un raccordement (22) de la pièce.

10. Dispositif de soudage suivant la revendication 8 ou 9, caractérisé en ce que l'autre point (1) de prélèvement est disposé sur une borne (24) de sortie de la source (25) de courant de soudage ou dans la source (25) de courant de soudage.

11. Dispositif de soudage suivant l'une des revendications 8 à 10, caractérisé en ce qu'un tube (18) de contact est prévu pour la transmission du courant de soudage au fil-électrode (16).

12. Dispositif de soudage suivant la revendication 11, caractérisé en ce que le fil-électrode (16) ne comporte pas de liaison électrique supplémentaire avec le potentiel du circuit de courant de soudage.

13. Dispositif de soudage suivant l'une des revendications 8 à 12,
caractérisé en ce que le système d'avance du fil est, à l'exception du point (2) de prélèvement sur le galet(17)d'avance du fil, isolé du point de vue électrique par rapport au circuit de courant de soudage.

14. Dispositif de soudage suivant l'une des revendications 8 à 13,
caractérisé en ce qu'il est prévu un raccordement central pour un paquet de tuyaux souples de brûleur, le dispositif d'avance du fil comportant une liaison électrique directe au potentiel du circuit du courant de soudage, sauf par l'intermédiaire du fil-électrode (16).

15. Dispositif de soudage suivant la revendication 14, caractérisé en ce que le raccordement central comporte une séparation galvanique d'une plaque (16) de réception pour des galets (17) d'avance de fil ou leur palier par rapport à un tronçon (29) d'entrée de fil dans le paquet de tuyaux souples de brûleur.

16. Dispositif de soudage suivant la revendication 13, 14 ou 15,
caractérisé en ce que le raccordement central comporte un tuyau souple en matière plastique pour guider le fil-électrode (16) qui isole ce dernier, à l'exception de la mise en contact dans le tube (18) de contact, du point de vue électrique par rapport au circuit de courant électrique et, à l'exception de la mise en contact pour le point (2) de prélèvement, sur le fil-électrode (16) ou sur le galet (17) d'avance du fil.

17. Dispositif de soudage suivant l'une des revendications 8 à 13, caractérisé en ce qu'il est prévu une borne de sortie séparée sur l'appareil d'avance du fil et la ligne de soudage dans le paquet de tuyaux souples de brûleur, le courant de soudage étant transmis de cette ligne au tube (18) de contact et par la suite au fil-électrode (16) et cette ligne ne comportant pas de liaison électrique supplémentaire directe ou indirecte avec le fil-électrode (16).
